# EUROPEAN PATENT APPLICATION

(11) **EP 1 770 815 A1**
(43) Date of publication of application: **04.04.2007**
(21) Application number: 06020625.7
(22) Date of filing: 29.09.2006
(51) Int. Cl.: H01M 8/10, H01M 8/04

(54) **Fuel cell system and method therefor of measuring fuel concentration of aqueous fuel solution**

(30) Priority: 29.09.2005 JP 2005285178
(71) Applicant: YAMAHA HATSUDOKI KABUSHIKI KAISHA, Iwata-shi, Shizuoka-ken (JP)
(72) Inventor: Muramatsu, Yasuyuki, Iwata-shi, Shizuoka-ken (JP)
(74) Representative: Grünecker, Kinkeldey, Stockmair & Schwanhäusser Anwaltssozietät

(57) **Abstract**

There is provided a fuel cell system capable of detecting a concentration of aqueous fuel solution easily and accurately. A fuel cell system 100 includes a fuel cell 104 which generates electric energy by electrochemical reactions; an ultrasonic sensor 164 which detects physical information of aqueous methanol solution to be used for the generation of electric energy by the fuel cell 104, based on an ultrasonic propagation speed in the aqueous methanol solution; a voltage sensor 168 which detects electrochemical information of the aqueous methanol solution based on an open-circuit voltage of the fuel cell 104; and first and second temperature sensors 166, 170 which detect temperatures of the aqueous methanol solution. The system further includes a CPU 172 which obtains a concentration of the aqueous methanol solution based on the physical information and a concentration of the aqueous methanol solution based on the electrochemical information, and selects one of the concentrations based on the detected temperature.

## Description

### BACKGROUND OF THE INVENTION

### Field of the Invention

The present invention relates to a fuel cell system and transport equipment including the same, and more specifically to a fuel cell system in which concentration of aqueous fuel solution is controlled, and to transport equipment including the fuel cell system.

### Description of the Related Art

Conventionally, in fuel cell systems, it is a common practice that the concentration of aqueous fuel solution (fuel concentration) is detected and water or fuel (highly concentrated aqueous fuel solution) is added as necessary whereby the concentration of the aqueous fuel solution is maintained at a consistent level.

The concentration of aqueous fuel solution can be detected by a concentration sensor of various types, such as those that make use of physical characteristics of the aqueous fuel solution or those that make use of electrochemical characteristics of the aqueous fuel solution. However, concentration sensors of the former type have a problem that detection accuracy decreases at a high temperature and becomes worse as the temperature rises, whereas concentration sensors of the latter type have a problem that detection accuracy decreases at a low temperature and becomes worse as the temperature lowers.

In an attempt to solve the problem in the former type, Patent Document 1 proposes that aqueous fuel solution is cooled when detecting the concentration of the aqueous fuel solution.
(Patent Document 1) JP-A 2005-209584

However, the technique disclosed in Patent Document 1 requires too much in that the aqueous fuel solution must be cooled so that its concentration can be detected.

In the concentration sensors of the electrochemical type, there is a possibility that outputs from the sensor will change over time and accuracy in the concentration detection of aqueous fuel solution will deteriorate.

### SUMMARY OF THE INVENTION

Therefore, a primary object of the present invention is to provide a fuel cell system capable of detecting the concentration of aqueous fuel solution easily and accurately, as well as to provide transport equipment including the system.

Another object of the present invention is to provide a fuel cell system capable of eliminating the deterioration of detection accuracy over time, as well as to provide transport equipment including the system.

According to an aspect of the present invention, there is provided a fuel cell system comprising: a fuel cell which generates electric energy by electrochemical reactions; first concentration detection means which detects a concentration of aqueous fuel solution to be used for the generation of electric energy by the fuel cell, by using a physical characteristic of the aqueous fuel solution; second concentration detection means which detects a concentration of the aqueous fuel solution by using an electrochemical characteristic of the aqueous fuel solution; temperature detection means which detects a temperature of the aqueous fuel solution; and selection means which selects one of the concentration obtained by the first concentration detection means and the concentration obtained by the second concentration detection means, based on the temperature detected by the temperature detection means.

According to the present invention, the temperature detection means detects a temperature of aqueous fuel solution, and based on the detected temperature, a concentration of the aqueous fuel solution obtained by one of the first concentration detection means and the second concentration detection means is selected. With the arrangement as the above, it is possible to select a concentration obtained by a concentration detection means which has higher detection accuracy in accordance with the temperature of aqueous fuel solution and it becomes possible to detect the concentration of aqueous fuel solution easily and accurately.

Preferably, the selection means causes each of the first concentration detection means and the second concentration detection means to detect a concentration of the aqueous fuel solution, and selects one of the concentrations if a detection result of the temperature detection means is between a first threshold value and a second threshold value which is smaller than the first threshold value. In the arrangement where use of the concentration detection means is switched from one to the other based on the switch-over temperature, concentration detection by one of the concentration detection means is often unsuccessful at or near the switch-over temperature. Therefore, the first threshold value and the second threshold value are set so as to define a range that includes the switch-over temperature. When the detection result of the temperature detection means is between the first threshold value and the second threshold value, each of the first concentration detection means and the second concentration detection means detect a concentration. This arrangement enables to detect a concentration even if detection by one of the concentration detection means is unsuccessful. It should be noted here that there may be an arrangement that the range between the first threshold value and the second threshold value is made wide so that concentration detection is made by both the first concentration detection means and the second concentration detection means at all practical presumed temperatures. Then, concentration detection is made by both the first concentration detection means and the second concentration detection means virtually at all times. With this arrangement, even if detection by one of the concentration detection means is unsuccessful, it is still possible to detect a concentration.

Further preferably, determination is made on if the concentration obtained by the first concentration detection means is valid or not. By checking validity of the concentration as the above, it becomes possible to obtain an accurate concentration.

Further, preferably, the selection means selects one of the concentration obtained by the first concentration detection means and the concentration obtained by the second concentration detection means based on the temperature detected by the temperature detection means and the switch-over temperature which is smaller than the first threshold value and greater than the second threshold value if it is determined that the concentration obtained by the first concentration detection means is valid. In this case, a concentration of aqueous fuel solution can be obtained accurately based on comparison between the switch-over temperature and the temperature detected by the temperature detection means.

Preferably, the switch-over temperature is set based on the concentration obtained by the first concentration detection means. Performance of the first concentration detection means varies sometimes, depending on the concentration of aqueous fuel solution. However, by setting the switch-over temperature in accordance with the concentration of aqueous fuel solution, it becomes possible to detect the concentration more accurately.

Further preferably, the selection means selects one of the concentration obtained by the first concentration detection means and the concentration obtained by the second concentration detection means based on the temperature detected by the temperature detection means and the switch-over temperature set by the setting means. This enables more accurate concentration detection.

The present invention can be utilized suitably when the first concentration detection means includes an ultrasonic sensor for detecting the concentration of aqueous fuel solution based on an ultrasonic propagation speed in the aqueous fuel solution and the second concentration detection means includes a voltage sensor for detecting the concentration of aqueous fuel solution based on an open-circuit voltage of the fuel cell. Detection accuracy of the ultrasonic sensor which is supposed to detect the ultrasonic propagation speed in the aqueous fuel solution decreases at a high temperature and becomes worse as the temperature rises. On the other hand, Detection accuracy of the voltage sensor which is supposed to detect an open-circuit voltage of the fuel cell decreases at a low temperature and becomes worse as the temperature lowers. However, according to the present invention, it is possible to select a concentration obtained through a concentration sensor which has higher detection accuracy in accordance with the temperature of aqueous fuel solution, and it becomes possible to detect the concentration of aqueous methanol solution accurately.

The present invention can be utilized suitably in cases where the temperature of the aqueous fuel solution during operation reaches or exceeds 50°C. In the case where the temperature of the aqueous fuel solution which flows through the fuel cell system during operation rises to a high temperature not lower than 50°C, concentration detection accuracy of the first concentration detection means which uses physical characteristics of the aqueous fuel solution decreases. However, according to the present invention, by utilizing not only the first concentration detection means but also the second concentration detection means which uses electrochemical characteristics of the aqueous fuel solution, it becomes possible, in a high temperature range, to select a detection result given by the second concentration detection means, which enables to obtain good detection accuracy under high temperature situations.

According to another aspect of the present invention, there is provided a fuel cell system including: a fuel cell which generates electric energy by electrochemical reactions; first concentration detection means which detects a concentration of aqueous fuel solution to be used for the generation of electric energy by the fuel cell, by using a physical characteristic of the aqueous fuel solution; storage means which stores conversion information for converting electrochemical information about the aqueous fuel solution into a concentration of the aqueous fuel solution; second concentration detection means which detects electrochemical information of the aqueous fuel solution by using an electrochemical characteristic of the aqueous fuel solution, makes reference to the conversion information and converts the electrochemical information into a concentration of the aqueous fuel solution; and update means which updates the conversion information in accordance with the concentration obtained by the first concentration detection means and the concentration obtained by the second concentration detection means.

Detection accuracy of the second concentration detection means which uses electrochemical characteristics of the aqueous fuel solution can deteriorate over time. According to the present invention, conversion information for converting the electrochemical information obtained by the second concentration detection means into the concentration is updated if it is determined that the detection accuracy of the second concentration detection means has deteriorated, based on comparison of a concentration outputted from the first concentration detection means to a concentration outputted from the second concentration detection means. This improves detection accuracy of the concentration obtained by the second concentration detection means.

In a motorbike and other transport equipment which include a fuel cell system, the temperature of aqueous fuel solution flowing in the fuel cell system changes over a wide range. Also, the transport equipment generally has a longer service life as compared with general electric appliances, and thus has a greater risk for the over-time deterioration of the second concentration detection means which uses electrochemical characteristics of aqueous fuel solution. Therefore, the present invention can be utilized suitably in such a motorbike or other transport equipment.

The above-described objects, characteristics, aspects and advantages of the present invention will become clearer from the following detailed description of embodiments to be made with reference to the attached drawings.

### BRIEF DESCRIPTION OF THE DRAWINGS

Fig. 1 is a left side view of a motorbike according to an embodiment of the present invention.
Fig. 2 is a perspective view taken from front left, showing how the fuel cell system is mounted on a motorbike frame.
Fig. 3 is a perspective view taken from rear left, showing how the fuel cell system is mounted on the motorbike frame.
Fig. 4 is a left side view showing piping in the fuel cell system.
Fig. 5 is a right side view showing the piping in the fuel cell system.
Fig. 6 is a perspective view taken from front left, showing the piping in the fuel cell system.
Fig. 7 is a perspective view taken from front right, showing the piping in the fuel cell system.
Fig. 8 is a diagram of a fuel cell stack.
Fig. 9 is a diagram of an individual fuel cell.
Fig. 10 is a system diagram showing piping of the fuel cell system.
Fig. 11 is a block diagram showing an electrical configuration of the fuel cell system.
Fig. 12 is a graph which shows a relationship between voltages (physical information) detected by an ultrasonic sensor and aqueous solution temperatures, as well as a relationship between voltages (electrochemical information) detected by a voltage sensor and the aqueous solution temperatures.
Fig. 13A is a graph which exemplifies a relationship between voltages detected by a voltage sensor and aqueous methanol solution concentrations, whereas Fig. 13B is a diagram for description that a concentration detected by a voltage sensor is corrected by using a concentration detected by an ultrasonic sensor.
Fig. 14A is a graph which shows a relationship between concentrations of aqueous methanol solution and ultrasonic propagation speeds, whereas Fig. 14B is a graph which shows a relationship between concentrations detected through an ultrasonic sensor and the switch-over temperatures.
Fig. 15 is a flowchart of an operation which relates to concentration detection of aqueous methanol solution and updating of conversion information.
Fig. 16 is a flowchart which shows a continued portion of the operation from Fig. 15.

### DETAILED DESCRIPTION OF THE PREFERRED EMBODIMENTS

Hereinafter, preferred embodiments of the present invention will be described, with reference to the drawings. The embodiments are cases in which a fuel cell system 100 according to the present invention is equipped in a motorbike 10 as an example of transport equipment.

The description will first cover the motorbike 10. It is noted that the terms left and right, front and rear, up and down as used in the embodiments of the present invention are determined from the normal state of riding, i.e., as viewed by the rider sitting on the rider's seat of the motorbike 10, with the rider facing toward a handle 24.

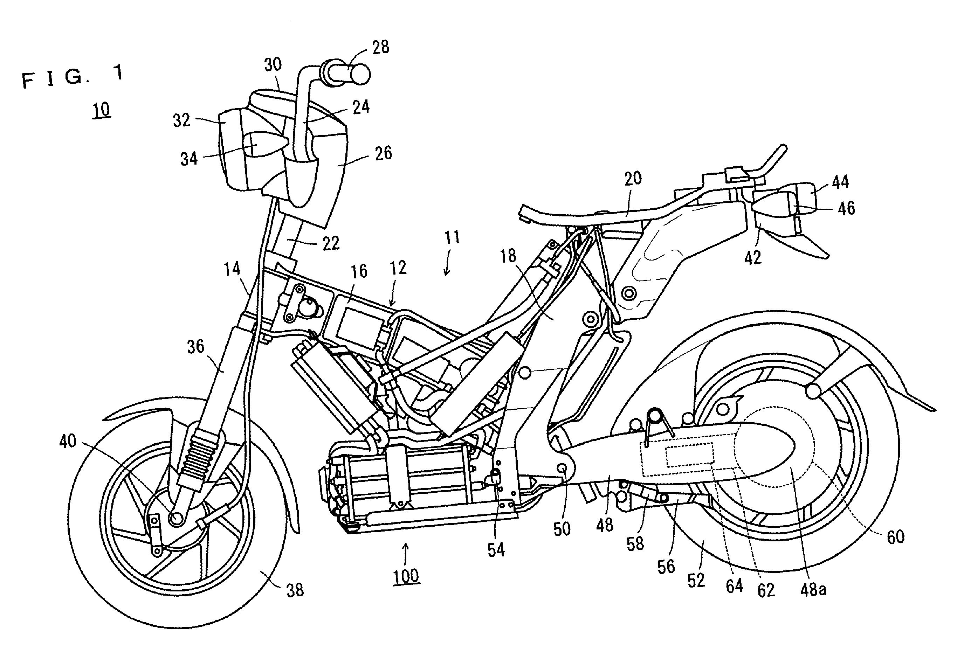

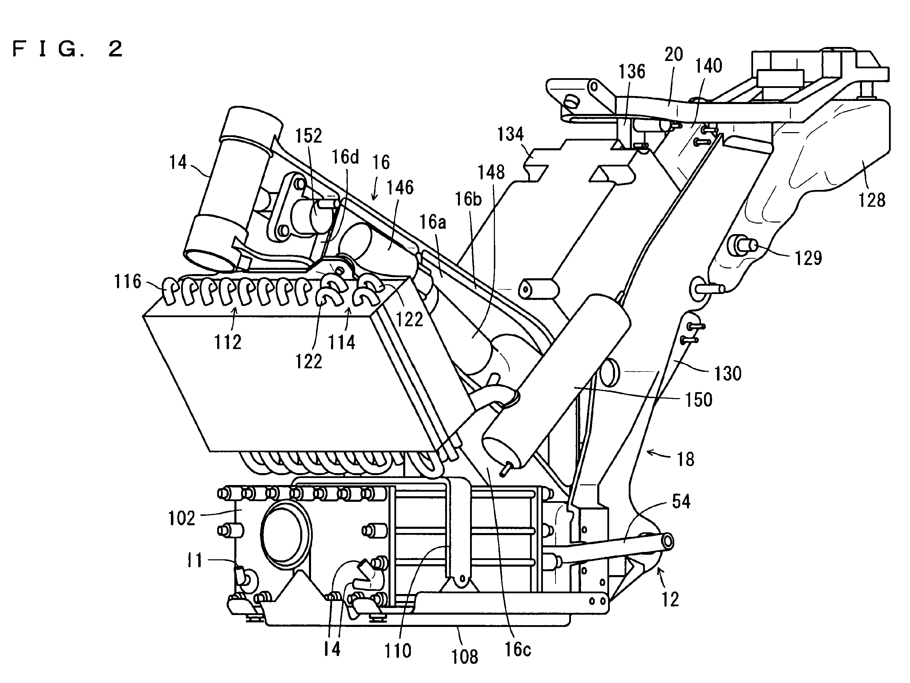

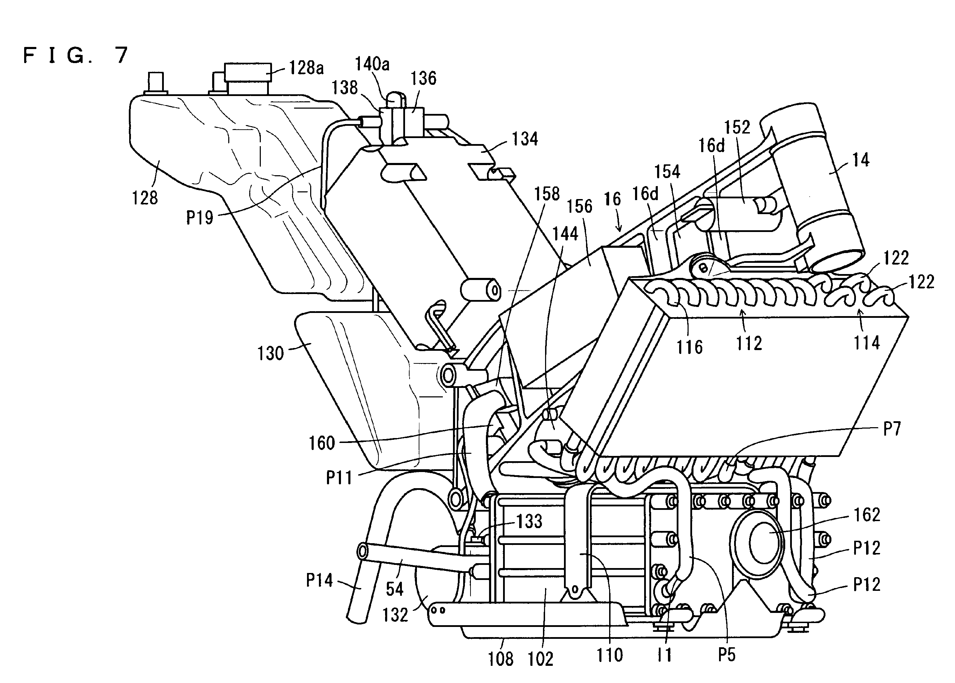

Referring to Fig. 1 through Fig. 7, the motorbike 10 includes a vehicle body 11. The vehicle body 11 has a vehicle frame 12. The vehicle frame 12 includes a head pipe 14, a front frame 16 which has an I-shaped vertical section and extends in a rearward and downward direction from the head pipe 14, a rear frame 18 which is connected with a rear end of the front frame 16 and rising in a rearward and upward direction, and a seat rail 20 which is attached to a top end of the rear frame 18. The front frame 16 has its rear end connected with a location on the rear frame 18 which is close to but slightly away from a center portion of the rear frame 18 toward a lower end. The front frame 16 and the rear frame 18 combine to form a substantially Y-shape structure as viewed from the side.

The front frame 16 includes: a plate member 16a which has a width in the vertical directions and extends in a rearward and downward direction, perpendicularly to the lateral directions of the vehicle; flanges 16b, 16c which are formed respectively at an upper end edge and a lower end edge of the plate member 16a, extend in a rearward and downward direction and have a width in the lateral directions; reinforcing ribs 16d protruding from both surfaces of the plate member 16a; and a connecting region 16e at a rear end for connecting the rear frame 18 with bolts for example. The reinforcing ribs 16d and the flanges 16b, 16c serve as storage walls, providing compartments on both surfaces of the plate member 16a as storage spaces for components of a fuel cell system 100 to be described later.

The rear frame 18 includes: plate members 18a, 18b which extend in a rearward and upward direction, have a width in the front and rear directions, and sandwich the connecting region 16e of the front frame 16; and a plate member (not illustrated) which connects the plate members 18a and 18b.

As shown in Fig. 1, a steering shaft 22 is pivotably inserted in the head pipe 14 for steering the vehicle. A handle support 26 is provided at an upper end of the steering shaft 22, to which the handle 24 is fixed. Grips 28 are provided at two ends of the handle 24. The right-hand grip 28 serves as a rotatable throttle grip.

A display/operation board 30 is provided in front of the handle 24 of the handle support 26. The display/operation board 30 is an integrated dashboard including a meter 30a for measuring and displaying various data concerning an electric motor 60 (to be described later), a display 30b provided by e.g. a liquid crystal display, for providing the rider with a variety of information concerning the ride, and input portion 30c for inputting a variety of information. A head lamp 32 is provided below the display/operation board 30 at the handle support 26, and a flasher lamp 34 is provided on each of the left and right sides of the head lamp 32.

A pair of left and right front forks 36 extend downwardly from a bottom end of the steering shaft 22. Each of the front forks 36 includes a bottom end supporting a front wheel 38 via a front wheel shaft 40. The front wheel 38 is suspended by the front forks 36, and is freely rotatable around the front wheel shaft 40.

On the other hand, a frame-like seat rail 20 is attached to a rear end of the rear frame 18. The seat rail 20 is fixed on an upper end of the rear frame 18 by welding for example, generally in the front and rear directions. An unillustrated seat is provided pivotably on the seat rail 20. A mounting bracket 42 is fixed to a rear end of the seat rail 20. The mounting bracket 42 supports a tail lamp 44 and a pair of left and right flasher lamps 46.

The rear frame 18 includes a lower end which pivotably supports a swing arm (rear arm) 48 via a pivot shaft 50. The swing arm 48 has a rear end 48a which rotatably supports a driving wheel i.e., a rear wheel 52, on a shaft via an electric motor 60 (to be described later). The swing arm 48 and the rear wheel 52 are suspended with an unillustrated rear spring with respect to the rear frame 18.

A pair of footrest attaching bars 54 are provided at a lower front portion of the rear frame 18, to protrude in the left and right directions from the rear frame 18 respectively. An unillustrated footrest is attached to each of the footrest attaching bars 54. Behind the footrest attaching bars 54, a main stand 56 is pivotably supported by the swing arm 48. The main stand 56 is biased in a closing direction by a return spring 58.

In the present embodiment, the swing arm 48 is provided therein with an electric motor 60 of an axial gap type, for example, which is connected with the rear wheel 52 to rotate the rear wheel 52, and a drive unit 62 which is electrically connected with the electric motor 60. The drive unit 62 includes a controller 64 for controlling the rotating drive of the electric motor 60.

The vehicle body 11 of the motorbike 10 as described is equipped with a fuel cell system 100 along the vehicle frame 12. The fuel cell system 100 generates electric energy for driving the electric motor 60 and other components.

Hereinafter, the fuel cell system 100 will be described.

The fuel cell system 100 is a direct methanol fuel cell system which uses methanol (an aqueous solution of methanol) directly without reformation for power generation.

The fuel cell system 100 includes a fuel cell stack (hereinafter simply called cell stack) 102 mounted below the front frame 16.

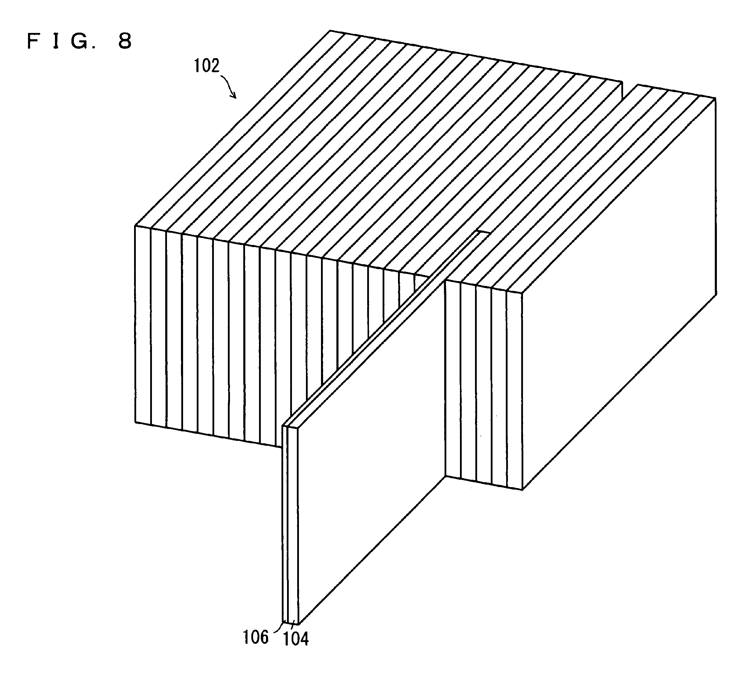

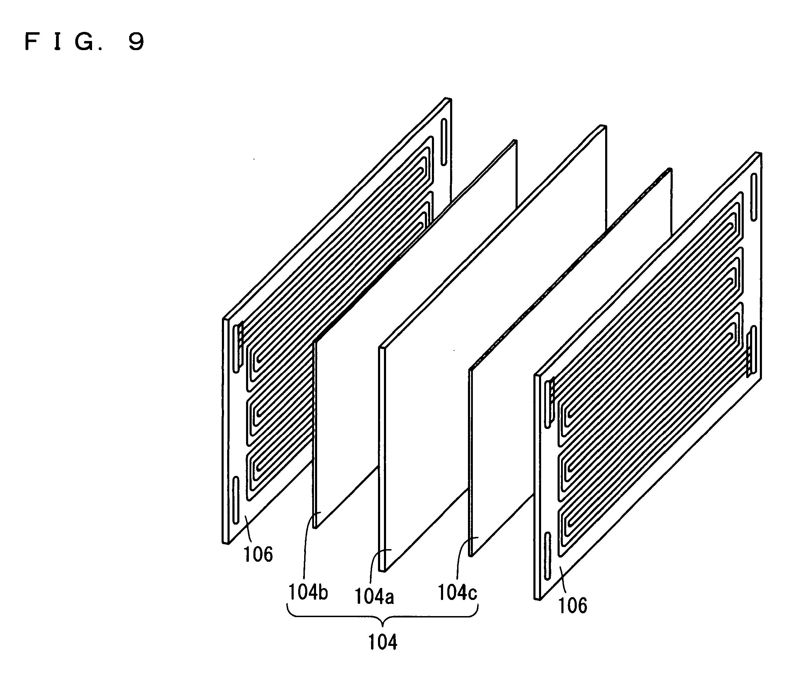

As shown in Fig. 8 and Fig. 9, the cell stack 102 includes a plurality of fuel cells (individual fuel cells) 104 layered (stacked) in alternation with separators 106. Each fuel cell 104 is capable of generating electric energy through electrochemical reactions between hydrogen ions based on methanol and oxygen. Each fuel cell 104 in the cell stack 102 includes electrolyte (electrolyte film) 104a provided by a solid polymer film for example, and a pair of an anode (fuel electrode) 104b and a cathode (air electrode) 104c opposed to each other, with the electrolyte 104a in between. The anode 104b and the cathode 104c each include a platinum catalyst layer provided on the side closer to the electrolyte 104a.

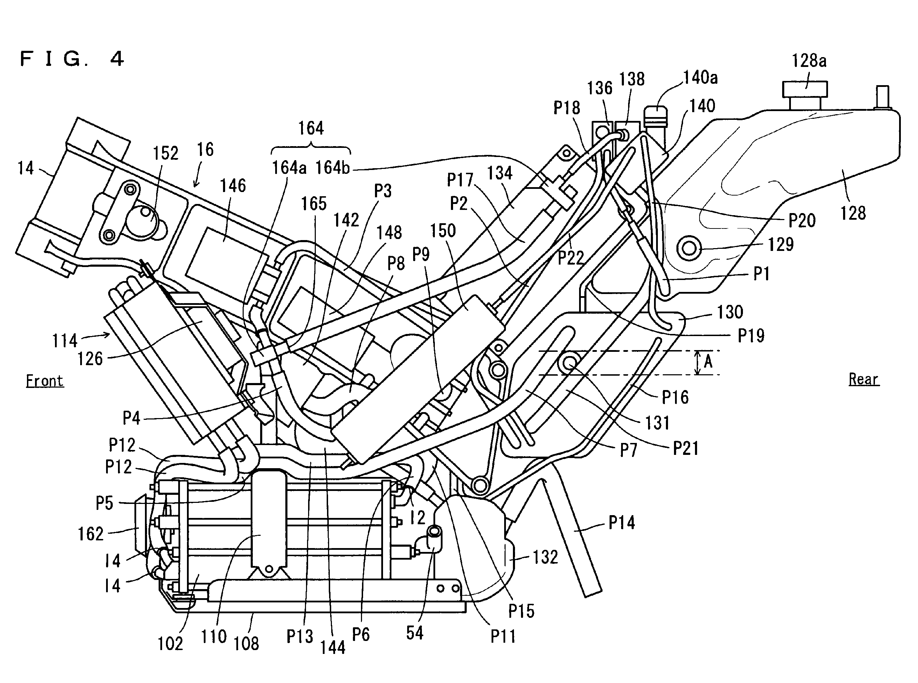

As shown in Fig. 4, etc., the cell stack 102 is placed on a skid 108. The skid 108 is supported by a stay stack 110 hung from the flange 16c of the front frame 16.

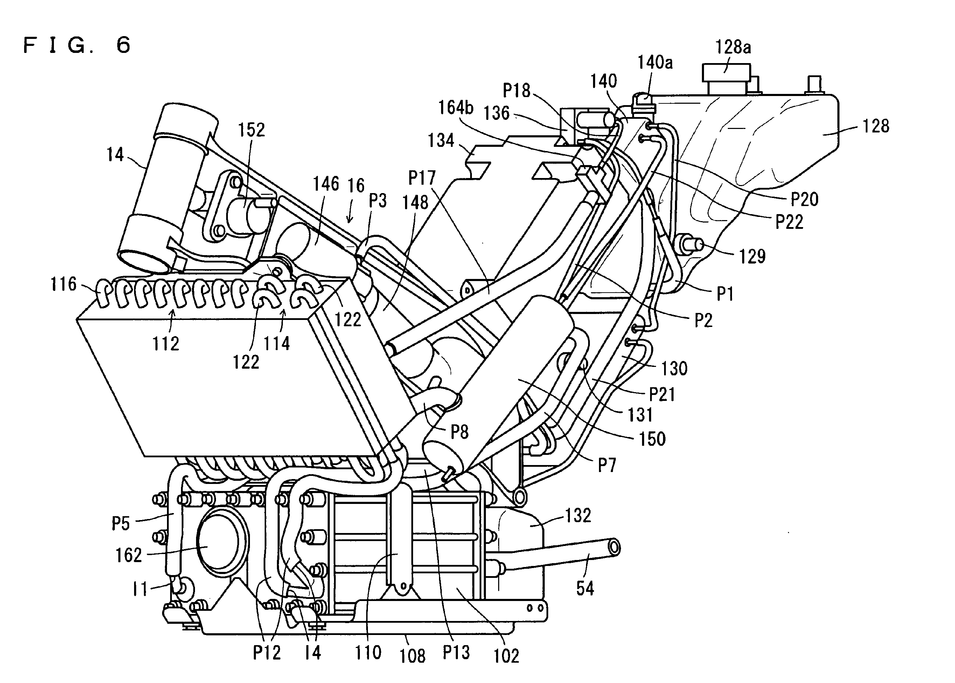

As shown in Fig. 6, an aqueous solution radiator 112 and a gas-liquid separation radiator 114 are disposed below the front frame 16, above the cell stack 102. The radiators 112 and 114 are integral with each other, having a front surface facing ahead of the vehicle in a slightly downward direction. The radiators 112 and 114 have a plurality of plate-like fins (not illustrated) which are perpendicular to the front surface. The radiators 112 and 114 as the above can receive sufficient winds while the vehicle is running.

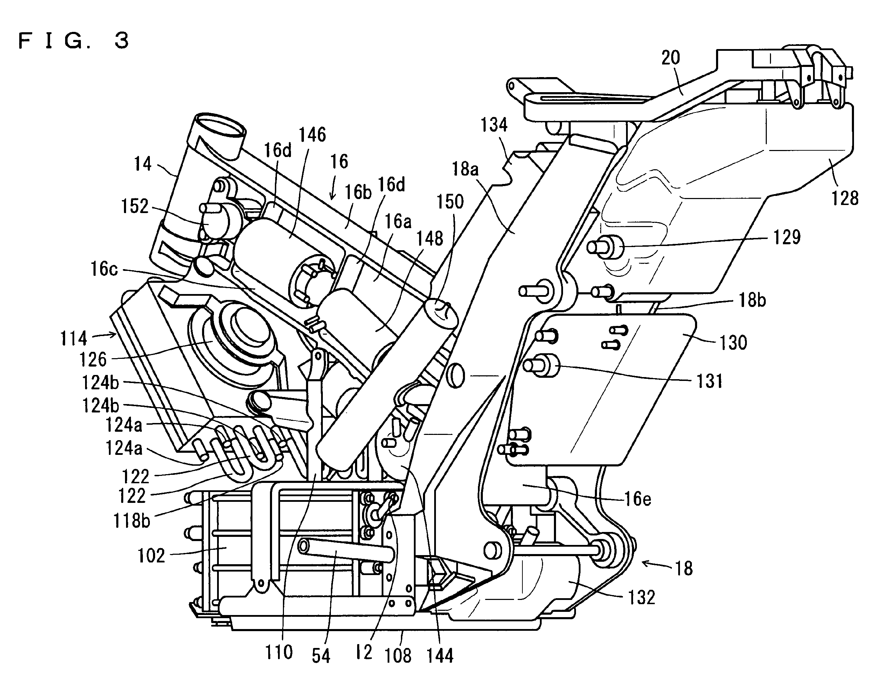

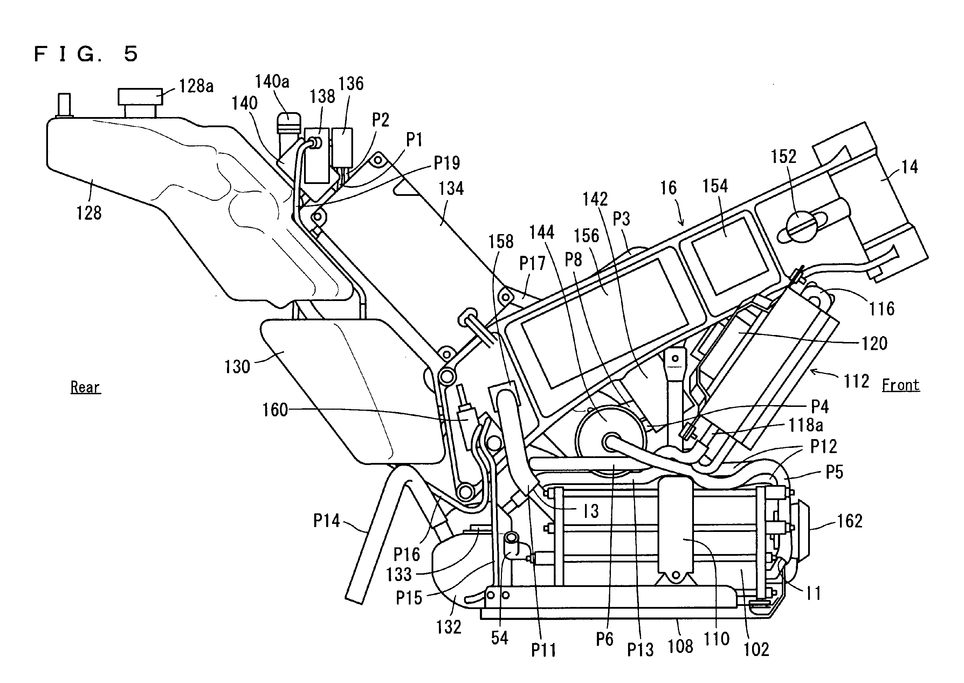

The radiator 112 includes a radiator pipe 116 formed in a swirling pattern as shown in Fig. 6, etc. The radiator pipe 116 is a single continuous pipe formed by welding a plurality of straight pipe members made of stainless steel for example, with a plurality of generally U shaped pipe joints, extending from an inlet 118a (See Fig. 5) through an outlet 118b (See Fig. 3). The radiator 112 has a rear surface faced by a cooling fan 120 opposed to the radiator pipe 116.

Likewise, the radiator 114 includes two radiator pipes 122 each formed in a meander pattern. Each radiator pipe 122 is a single continuous pipe formed by welding a plurality of straight pipe members made of stainless steel for example, with a plurality of generally U shaped pipe joints, extending from an inlet 124a (See Fig. 3) through an outlet 124b (See Fig. 3). The radiator 114 has a rear surface faced by a cooling fan 126 opposed to the radiator pipe 122.

Returning to Fig. 1 through Fig. 7, and referring mainly to Fig. 3, a fuel tank 128, an aqueous solution tank 130 and a water tank 132 are disposed in this order from top to bottom, behind the connecting region 16e of the front frame 16. The fuel tank 128, the aqueous solution tank 130 and the water tank 132 are formed by PE (polyethylene) blow molding, for example.

The fuel tank 128 is below the seat rail 20 and is attached to a rear end of the seat rail 20. The fuel tank 128 contains a methanol fuel (high concentration aqueous solution of methanol) having a high concentration level (containing methanol at approximately 50 wt%, for example) which is used as fuel for the electrochemical reaction in the cell stack 102. The fuel tank 128 has a lid 128a on its upper surface. The lid 128a is removed when replenishing the tank with methanol fuel.

The aqueous solution tank 130 is below the fuel tank 128, and is attached to the rear frame 18. The aqueous solution tank 130 contains aqueous methanol solution, which is a solution of the methanol fuel from the fuel tank 128 diluted to a suitable concentration (containing methanol at approximately 3 wt%, for example) for the electrochemical reaction in the cell stack 102. In other words, the aqueous solution tank 130 contains aqueous methanol solution which is to be sent by the aqueous solution pump 146 (to be described later) to the cell stack 102.

The fuel tank 128 is provided with a level sensor 129 for detecting the height of liquid surface of the methanol fuel in the fuel tank 128. The aqueous solution tank 130 is provided with a level sensor 131 for detecting the height of liquid surface of the aqueous methanol solution in the aqueous solution tank 130. By detecting the height of liquid surfaces with the level sensors 129, 131, the amount of liquids in the tanks can be detected. The liquid surface in the aqueous solution tank 130 is controlled to stay within a range indicated by a letter A in Fig. 4 for example.

The water tank 132 is between the plate members 18a and 18b of the rear frame 18 and behind the cell stack 102. A level sensor 133 is attached to the water tank 132 in order to detect a water level in the water tank 132.

In front of the fuel tank 128 and above the flange 16b of the front frame 16 is a secondary battery 134. The secondary battery 134 is disposed on an upper surface of the plate member (not illustrated) of the rear frame 18. The secondary battery 134 stores the electric energy generated by the cell stack 102, and supplies the stored electric energy to the electric components in response to commands from the controller 156 (to be described later). For example, the secondary battery 134 supplies electric energy to peripheral components and the drive unit 62.

Above the secondary battery 134 and below the seat rail 20 is disposed a fuel pump 136 and a detection valve 138. Further, a catch tank 140 is disposed above the aqueous solution tank 130.

The catch tank 140 has a lid 140a on its upper surface. If the fuel cell system 100 has not ever been started (when the aqueous solution tank 130 is empty) for example, the lid 140a is removed to supply the tank with aqueous methanol solution. The catch tank 140 is formed by PE (polyethylene) blow molding, for example.

An air filter 142 is disposed in a space surrounded by the front frame 16, the cell stack 102 and the radiators 112, 114 for removing impurities such as dust contained in gas. Behind and below the air filter 142 is disposed an aqueous solution filter 144.

As shown Fig. 4, an aqueous solution pump 146 and an air pump 148 are housed in the storage space on the left side of the front frame 16. On the left side of the air pump 148 is an air chamber 150. The aqueous solution pump 146 drives to pump aqueous methanol solution toward the cell stack 102.

Further, as shown in Fig. 5, a main switch 152, a DC-DC converter 154, a controller 156, a rust prevention valve 158 and a water pump 160 are disposed in this order from front to rear in the storage space on the right side of the front frame 16. The main switch 152 penetrates the storage space in the front frame 16 from right to left. In front of the cell stack 102 is a horn 162. The DC-DC converter 154 converts the electric voltage from 24 volts to 12 volts. The 12 volt power is used to drive fans 120, 126.

With the above-described layout, reference will now be made to Fig. 4 through Fig. 7 and Fig. 10 to describe piping in the fuel cell system 100.

The fuel tank 128 and the fuel pump 136 are connected with each other by a pipe P1. The fuel pump 136 and the aqueous solution tank 130 are connected with each other by a pipe P2. The pipe P1 connects a lower end of a left side surface of the fuel tank 128 with a lower end of a left side surface of the fuel pump 136. The pipe P2 connects a lower end of a left side surface of the fuel pump 136 with a lower end of a left side surface of the aqueous solution tank 130. By driving the fuel pump 136, methanol fuel in the fuel tank 128 is supplied to the aqueous solution tank 130 via the pipes P1, P2.

The aqueous solution tank 130 and the aqueous solution pump 146 are connected with each other by a pipe P3. The aqueous solution pump 146 and the aqueous solution filter 144 are connected with each other by a pipe P4. The aqueous solution filter 144 and the cell stack 102 are connected with each other by a pipe P5. The pipe P3 connects a lower corner of a left side surface of the aqueous solution tank 130 with a rear portion of the aqueous solution pump 146. The pipe P4 connects a rear portion of the aqueous solution pump 146 with a left side surface of the aqueous solution filter 144. The pipe P5 connects a right side surface of the aqueous solution filter 144 with an anode inlet I1 located at a right lower corner of a front surface of the cell stack 102. By driving the aqueous solution pump 146, aqueous methanol solution from the aqueous solution tank 130 is pumped from the pipe P3 side toward the pipe P4 side. Then, the aqueous solution filter 144 removes impurities from the aqueous methanol solution, and the solution flows through the pipe P5 to the cell stack 102. According to the present embodiment, the pipes P4 and P5 constitute a guide pipe which guide aqueous methanol solution from the aqueous solution pump 146 to each of the fuel cells 104 in the cell stack 102.

The cell stack 102 and the aqueous solution radiator 112 are connected with each other by a pipe P6, and the radiator 112 and the aqueous solution tank 130 are connected with each other by a pipe P7. The pipe P6 connects an anode outlet I2 located at an upper left corner of a rear surface of the cell stack 102 with an inlet 118a (See Fig. 5) of the radiator pipe 116 which comes out of a right side end of a lower surface of the radiator 112. The pipe P7 connects an outlet 118b (See Fig. 3) of the radiator pipe 116 with an upper corner of a left side surface of the aqueous solution tank 130. The radiator pipe 116 comes out of a lower surface of the radiator 112, from near a left end but slightly closer to the center of the radiator's lower surface. Unused aqueous methanol solution and carbon dioxide discharged from the cell stack 102 flow through the pipe P6 to the radiator 112 where they are cooled, and then returned via the pipe P7 to the aqueous solution tank 130. With this arrangement, the temperature of aqueous methanol solution in the aqueous solution tank 130 can be deceased.

The pipes P1 through P7 serve primarily as a flow path for the fuel.

The air filter 142 and the air chamber 150 are connected with each other by a pipe P8. The air chamber 150 and the air pump 148 are connected with each other by a pipe P9, the air pump 148 and the rust prevention valve 158 are connected with each other by a pipe P10 whereas the rust prevention valve 158 and the fuel cell stack 102 are connected with each other by a pipe P11. The pipe P8 connects a rear portion of the air filter 142 with a portion of the air chamber 150 which is slightly ahead of the center of the chamber. The pipe P9 connects a lower center portion of the air chamber 150 with a rear portion of the air pump 148. The pipe P10 connects the air pump 148 located on the left side of the plate member 16a in the front frame 16 with the rust prevention valve 158 located on the right side of the plate member 16a. The pipe P11 connects the rust prevention valve 158 with a cathode inlet I3 located on an upper right end of a rear surface of the cell stack 102. When the fuel cell system 100 generates power, the rust prevention valve 158 is opened. By driving the air pump 148 under this condition, air containing oxygen is introduced from outside. The introduced air is purified by the air filter 142, then flows through the pipe P8, the air chamber 150 and the pipe P9 to the air pump 148, and then through the pipe P10, the rust prevention valve 158 and the pipe P11, and is supplied to the cell stack 102. The rust prevention valve 158 is closed when the fuel cell system 100 is stopped, prevents backflow of water vapor into the air pump 148 and thereby prevents rusting of the air pump 148.

The cell stack 102 and the gas-liquid separation radiator 114 are connected with each other by two pipes P12. The radiator 114 and the water tank 132 are connected with each other by two pipes P13. The water tank 132 is provided with a pipe (exhaust pipe) P14. Each of the pipes P12 connects a cathode outlet I4 located on a lower left corner of a front surface of the cell stack 102 with an inlet 124a (See Fig. 3) of a corresponding radiator pipe 122 which comes out from a left side end of a lower surface of the radiator 114. Each of the pipes P13 connects an outlet 124b (See Fig. 3) of a corresponding one of the radiator pipes 122 with an upper portion of a front surface of the water tank 132. The radiator pipes 122 come out of the lower surface of the radiator 114, at a location slightly closer to the center than the left side end. The pipe P14 is connected with an upper portion of a rear surface of the water tank 132, and is angled so it goes up and then down. Exhaust gas which is discharged from the cathode outlet I4 of the cell stack 102 contains water (liquid water and water vapor) and carbon dioxide. The exhaust gas flows through the pipe P12 into the radiator 114, where water vapor is liquefied. After leaving the radiator 114, the exhaust gas flows together with the water through the pipe P13 into the water tank 132, before being discharged to the outside via the pipe P14.

The pipes P8 through P14 serve primarily as a flow path for the exhaust gas.

The water tank 132 and the water pump 160 are connected with each other by a pipe P15 whereas the water pump 160 and the aqueous solution tank 130 are connected with each other by a pipe P16. The pipe P15 connects a lower portion of a right side surface of the water tank 132 with a center portion of the water pump 160. The pipe P16 connects a center portion of the water pump 160 with an upper corner of a left side surface of the aqueous solution tank 130. By driving the water pump 160, water in the water tank 132 is returned to the aqueous solution tank 130 via the pipes P15, P16.

The pipes P15, P16 serve as a flow path for the water.

The pipe P4 is connected with the pipe P17 so as to receive part of aqueous methanol solution which is pumped by the aqueous solution pump 146 and is flowing through the pipe P4. As shown in Fig. 4, an ultrasonic sensor 164 is attached to the pipe P17 for measuring methanol concentration in the aqueous methanol solution in the pipe P17. The ultrasonic sensor 164 is used for measuring the methanol concentration of the aqueous methanol solution in the pipe P17, based on the principle that the ultrasonic wave travels at different speeds depending on the methanol concentration of aqueous methanol solution (methanol percentage in the aqueous methanol solution) which is flowing in the pipe.

As shown in Fig. 4, the ultrasonic sensor 164 has a transmitter unit 164a which transmits an ultrasonic wave, and a receiver unit 164b which detects the ultrasonic wave. The transmitter unit 164a is inserted into the pipe P4. The transmitter unit 164a has a prong 165 which is connected with a starting end of the pipe P17. Through the prong 165, aqueous methanol solution is introduced into the pipe P17. The receiver unit 164b is connected with a tail end of the pipe P17, and is disposed on the left side surface of the secondary battery 134. The ultrasonic sensor 164 generates an ultrasonic wave at the transmitter unit 164a, and receives the ultrasonic wave at the receiver unit 164b. The controller 156 detects the methanol concentration of the aqueous methanol solution in the pipe P17, based on an ultrasonic wave propagation speed which is obtained from the amount of time from the start of ultrasonic wave generation at transmitter unit 164a to the reception of the ultrasonic wave at the receiver unit 164b.

The receiver unit 164b and the detection valve 138 are connected with each other by a pipe P18. The detection valve 138 and the aqueous solution tank 130 are connected with each other by a pipe P19. The pipe P18 connects an upper surface of the receiver unit 164b with a left side surface of the detection valve 138. The pipe P19 connects a right side surface of the detection valve 138 with an upper surface of the aqueous solution tank 130.

The pipes P17 through P19 serve as a flow path primarily for concentration detection.

The aqueous solution tank 130 and the catch tank 140 are connected with each other by a pipe P20. The catch tank 140 and the aqueous solution tank 130 are connected with each other by a pipe P21. The catch tank 140 and the air chamber 150 are connected with each other by a pipe P22. The pipe P20 connects an upper corner of a left side surface of the aqueous solution tank 130 with an upper corner of a left side surface of the catch tank 140. The pipe P21 connects a lower end of the catch tank 140 with a lower corner of a left side surface of the aqueous solution tank 130. The pipe P22 connects a location of a left side surface of the catch tank 140 closer to an upper portion thereof, with an upper end surface of the air chamber 150. Gas (main ingredients are carbon dioxide, gaseous methanol and water vapor) in the aqueous solution tank 130 is supplied to the catch tank 140 via the pipe P20. The gaseous methanol and the water vapor are cooled and liquefied in the catch tank 140, then flow through the pipe P21 back to the aqueous solution tank 130. Gas (carbon dioxide, methanol which was not liquefied and water vapor) in the catch tank 140 is supplied to the air chamber 150 via the pipe P22.

The pipes P20 through P22 constitute a flow path primarily for fuel processing.

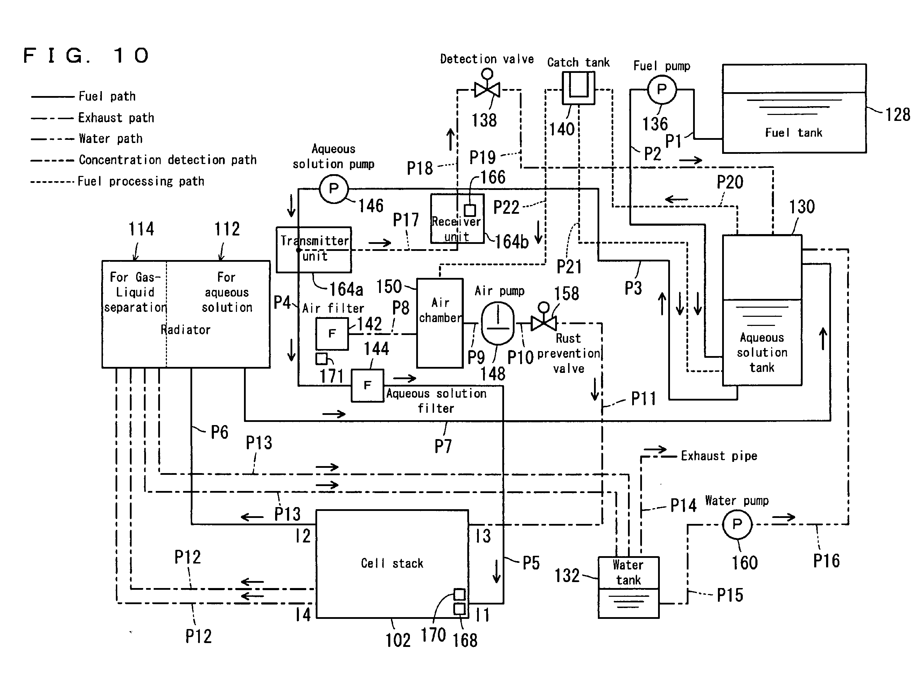

As shown in Fig. 10, the receiver unit 164b of the ultrasonic sensor 164 is provided with a first temperature sensor 166 for detecting the temperature of aqueous methanol solution that is flowing through the ultrasonic sensor 164. Near an anode inlet I1 of the cell stack 102, there are provided a voltage sensor 168 for detecting the concentration of aqueous methanol solution supplied to the cell stack 102 by using electrochemical characteristics of the aqueous methanol solution, and a second temperature sensor 170 for detecting the temperature of the aqueous methanol solution supplied to the cell stack 102. Further, an ambient temperature sensor 171 for detecting the ambient temperature is provided near an air filter 142.

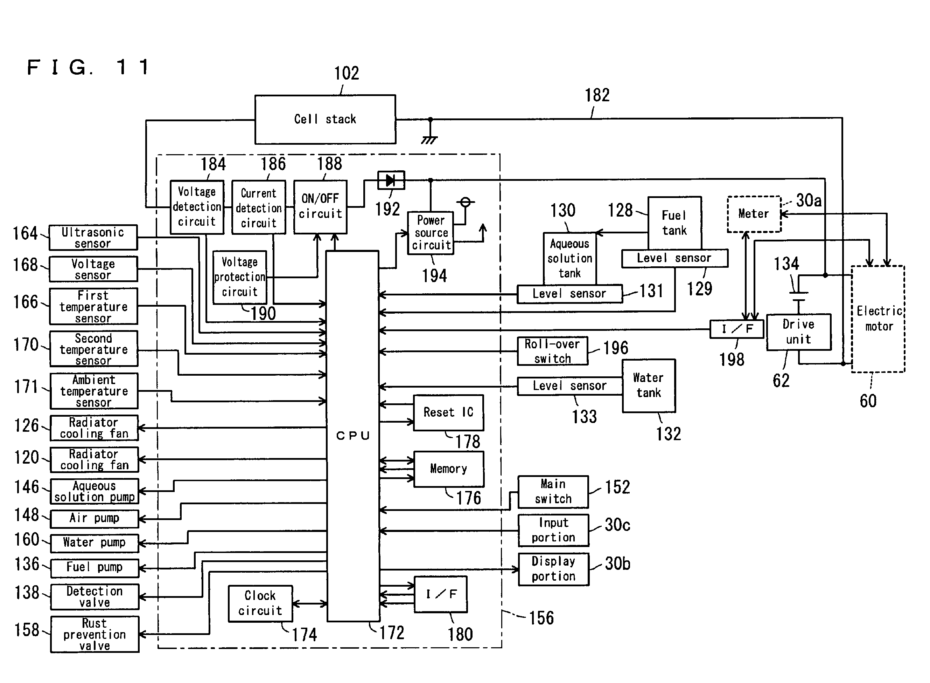

Description will now cover an electrical configuration of the fuel cell system 100 while making reference to Fig. 11.

The controller 156 of the fuel cell system 100 includes: a CPU 172 for performing necessary calculations and controlling operations of the fuel cell system 100; a clock circuit 174 which provides the CPU 172 with clock signals; a memory 176 provided by e.g. an EEPROM for storing programs, data, calculation data, etc. for controlling the operations of the fuel cell system 100; a reset IC 178 for preventing erroneous operation of the fuel cell system 100; an interface circuit 180 for connection with external components; a voltage detection circuit 184 for detecting a voltage in an electric circuit 182 which connects the cell stack 102 with the electric motor 60 that drives the motorbike 10; a current detection circuit 186 for detecting an electric current which passes through the electric circuit 182; an ON/OFF circuit 188 for opening and closing the electric circuit 182; a voltage protection circuit 190 for protecting the electric circuit 182 from overvoltage; a diode 192 placed in the electric circuit 182; and a power source circuit 194 for providing the electric circuit 182 with a predetermined voltage.

The CPU 172 of the controller 156 as described above is supplied with detection signals from the ultrasonic sensor 164, the voltage sensor 168, the first temperature sensor 166, the second temperature sensor 170 and the ambient temperature sensor 171. The CPU 172 is also supplied with detection signals from a roll-over switch 196 which detects if the vehicle is rolled over, input signals from a main switch 152 which turns ON or OFF the electric power, and other signals from the input portion 30c for various settings and information entry. Further, the CPU 172 is supplied with detection signals from the level sensors 129, 131 and 133.

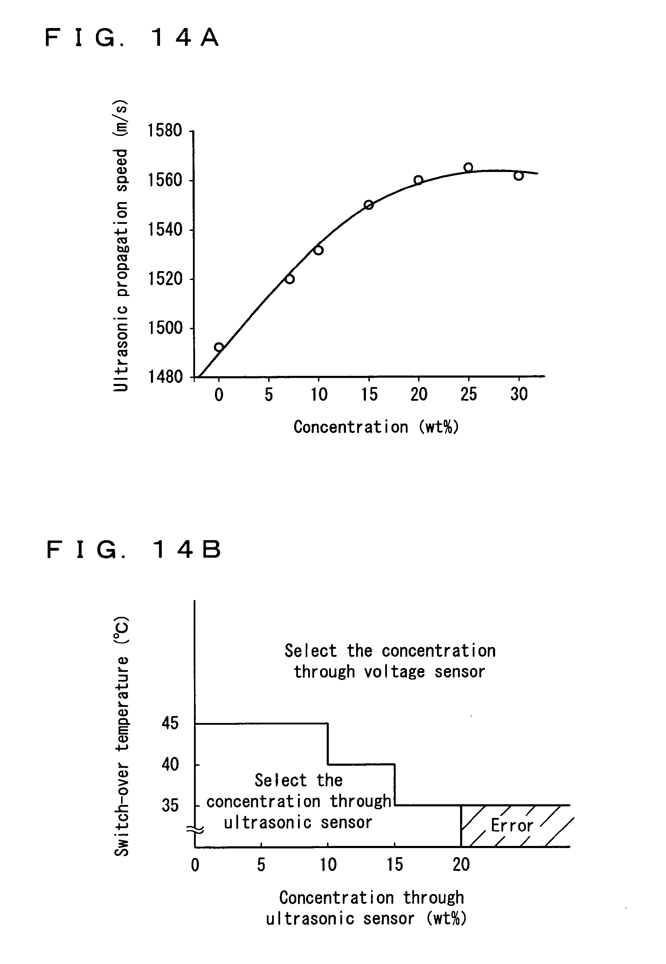

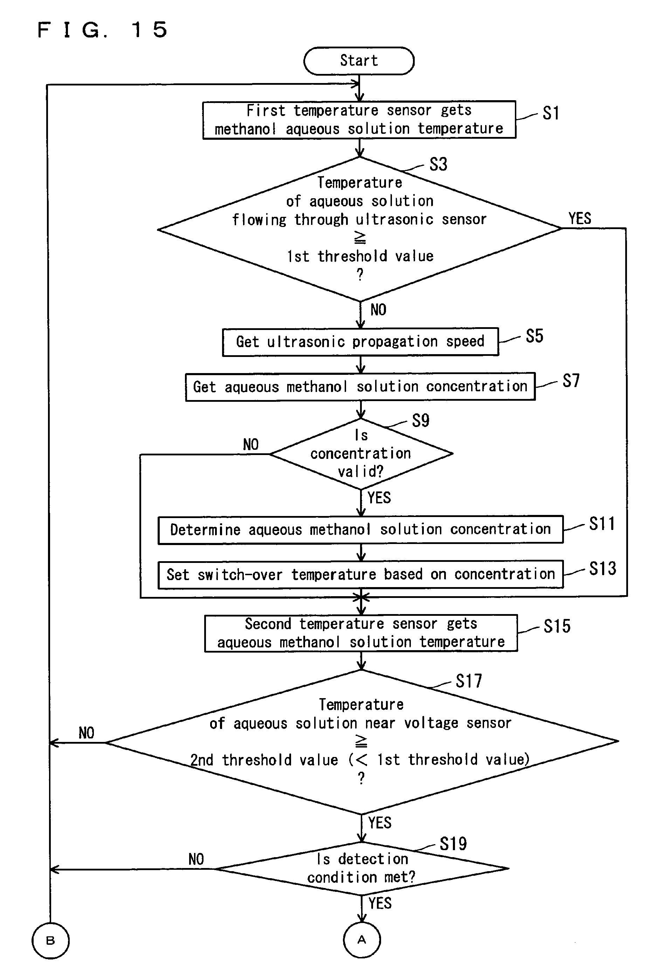

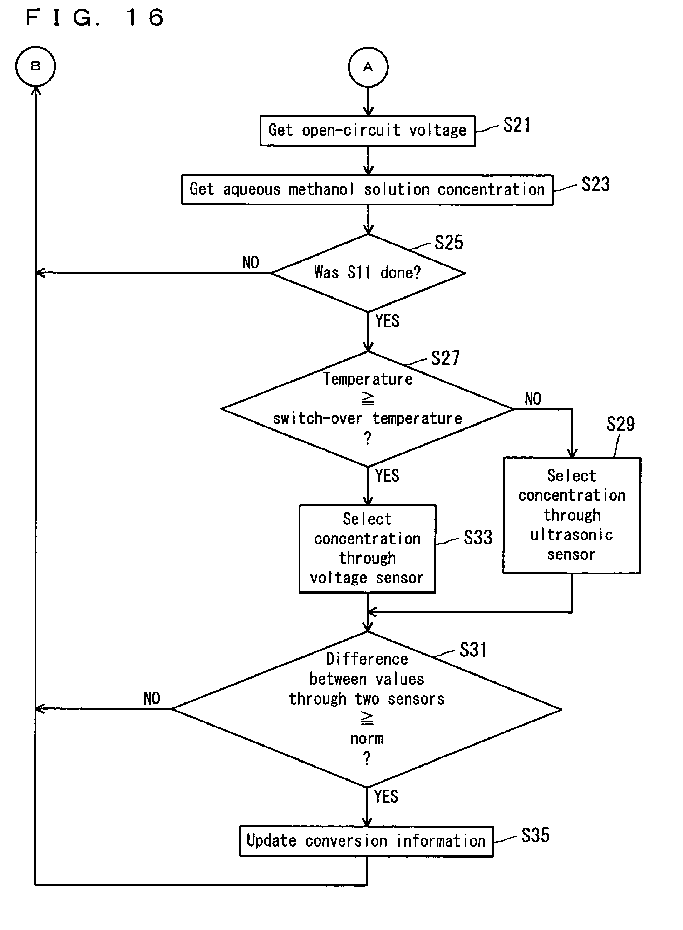

The memory 176 which serves as storage means stores: programs for performing operations depicted in Fig. 15 and Fig. 16; conversion information for converting physical information (a voltage which indicates a propagation speed) obtained by the ultrasonic sensor 164 into a concentration; conversion information for converting electrochemical information (an open-circuit voltage) obtained by the voltage sensor 168 into a concentration; a first threshold value, a second threshold value and a switch-over temperature to which a detected temperature is compared; calculation data and so on. The conversion information may be table data, for example, which relate voltages as information to corresponding concentrations to which the voltages are to be converted. The present embodiment uses a set of table data which relate physical information (voltages which indicate propagation speeds) to corresponding concentrations, and another set of table data which relate electrochemical information (open-circuit voltages) to corresponding concentrations. The memory 176 also stores table data shown in Fig. 14B, which relates concentrations detected through the ultrasonic sensor 164 to the switch-over temperatures.

The CPU 172 controls system components such as the fuel pump 136, the aqueous solution pump 146, the air pump 148, the water pump 160, the cooling fans 120 and 126, the detection valve 138 and the rust prevention valve 158. The CPU 172 also controls the display portion 30b which displays various information for the motorbike rider. The CPU 172 serves as selection means, determination means, setting means and conversion means.

The cell stack 102 is connected with the secondary battery 134 and the drive unit 62. The secondary battery 134 and the drive unit 62 are connected with the electric motor 60. The secondary battery 134 complements the output from the cell stack 102, by being charged with electric energy from the cell stack 102 and discharging the electric energy to supply power to the electric motor 60 and the system components.

The electric motor 60 is connected with the meter 30a for measuring various data concerning the electric motor 60. The data and status information of the electric motor 60 obtained by the meter 30a are supplied to the CPU 172 via the interface circuit 198.

Next, a main process of the fuel cell system 100 in operation (power generation) will be described.

When the main switch 152 is turned ON, the fuel cell system 100 drives its components such as the aqueous solution pump 146 and the air pump 148, thereby starting the operation.

As the aqueous solution pump 146 is driven, aqueous methanol solution stored in the aqueous solution tank 130 is sent from the pipe P3 side to the pipe P4 side, into the aqueous solution filter 144. The aqueous solution filter 144 removes impurities and so on from the aqueous methanol solution, then the aqueous methanol solution is sent through the pipe P5 and the anode inlet I1, and then supplied directly to the anode 104b in each of the fuel cells 104 which constitute the cell stack 102.

Meanwhile, as the air pump 148 is driven, air is introduced through the air filter 142 and flows through the pipe P8 into the air chamber 150 where noise is silenced. The air which was introduced and gas which was supplied to the air chamber 150 from the catch tank 140 are supplied via the pipes P9 through P11 and the cathode inlet I3 to the cathode 104c in each of the fuel cells 104 which constitute the cell stack 102.

At the anode 104b in each fuel cell 104, methanol and water in the supplied aqueous methanol solution chemically react with each other to produce carbon dioxide and hydrogen ions. The produced hydrogen ions flow to the cathode 104c via the electrolyte 104a, and electrochemically react with oxygen in the air supplied to the cathode 104c, to produce water (water vapor) and electric energy. Thus, power generation is performed in the cell stack 102. The generated electric energy is sent to and stored at the secondary battery 134, and is used, for example, to drive the motorbike 10.

Carbon dioxide produced at the anode 104b in each fuel cell 104 and unused aqueous methanol solution are heated (up to approximately 65°C-70°C for example) in the electrochemical reaction, and part of the unused aqueous methanol solution is vaporized. The carbon dioxide and the unused aqueous methanol solution flow from the anode outlet I2 of the cell stack 102 into the aqueous solution radiator 112, where they are cooled (down to approximately 40°C for example) by the fan 120 while flowing through the radiator pipe 116. The carbon dioxide and the unused aqueous methanol solution which have been cooled then flow through the pipe P7, and return to the aqueous solution tank 130.

Meanwhile, most of the water vapor occurred on the cathode 104c in each fuel cell 104 is liquefied and discharged in the form of water from the cathode outlet I4 of the cell stack 102, with saturated water vapor being discharged in the form of gas. Part of the water vapor which was discharged from the cathode outlet I4 is cooled and liquefied by lowering the dew point in the radiator 114. The radiator 114 liquefies the water vapor through operation of the fan 126. Water (liquid water and water vapor) from the cathode outlet I4 are supplied via the pipe 12, the radiator 114 and the pipe P13 to the water tank 132 together with unused air.

Also, at the cathode 104c in each fuel cell 104, the vaporized methanol from the catch tank 140 and methanol which has moved to the cathode due to crossover react with oxygen in the platinum catalyst layer, thereby being decomposed to harmless substances of water and carbon dioxide. The water and carbon dioxide which occurred from the methanol are discharged from the cathode outlet I4, and supplied to the water tank 132 via the radiator 114. Further, water which has moved due to water crossover to the cathode 104c in each fuel cell 104 is discharged from the cathode outlet I4, and supplied to the water tank 132 via the radiator 114.

The water collected in the water tank 132 is recycled appropriately by the pumping operation of the water pump 160, through the pipes P15, P16 to the aqueous solution tank 130, and is used as water for the aqueous methanol solution.

While the fuel cell system 100 is in operation, a concentration detection routine for aqueous methanol solution is performed regularly for efficient power generation by each fuel cell 104 while preventing the fuel cell 104 from premature deterioration. Based on the detection result, adjustment is made on the methanol concentration of aqueous methanol solution which is to be supplied to the cell stack 102. Specifically, methanol fuel is supplied from the fuel tank 128 to the aqueous solution tank 130 whereas water is returned from the water tank 132 to the aqueous solution tank 130 based on the detection result.

Attention should be paid here to the use of two concentration sensors, i.e. the ultrasonic sensor 164 and the voltage sensor 168, in order to detect the methanol concentration of the aqueous methanol solution. In the present embodiment, the ultrasonic sensor 164 and the CPU 172 constitute the first concentration detection means which detects the concentration of aqueous methanol solution by using physical characteristics of the aqueous methanol solution whereas the voltage sensor 168 and the CPU 172 constitute the second concentration detection means which detects the concentration of the aqueous methanol solution by using electrochemical characteristics of the aqueous methanol solution.

The ultrasonic sensor 164 detects an ultrasonic propagation speed (sonic speed) which indicates a concentration of aqueous methanol solution, and converts the propagation speed into a voltage value, i.e. physical information. The voltage sensor 168 detects an open-circuit voltage of the fuel cell (individual fuel cell) 104, i.e. electrochemical information.

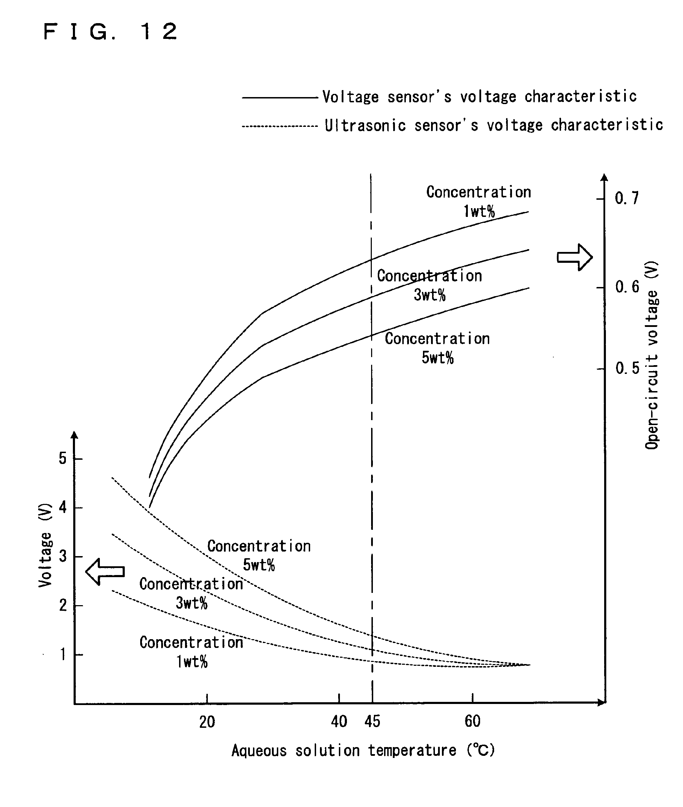

As shown in Fig. 12, in the ultrasonic sensor 164, the voltage difference between two different concentrations becomes larger as the temperature becomes lower, because difference in ultrasonic propagation speed in methanol and in water becomes greater at a lower temperature. On the other hand, in the voltage sensor 168, the open-circuit voltage difference between two different concentrations becomes larger as the temperature becomes higher, because chemical reactions are more active at a higher temperature, increasing the open-circuit voltage difference between two different concentrations.

It is understood from Fig. 12 that the ultrasonic sensor 164 has higher detection accuracy at relatively low temperatures while the voltage sensor 168 has higher detection accuracy at relatively high temperatures. Therefore, the concentration detected by the ultrasonic sensor 164 is used if the temperature detected by the first temperature sensor 166 is lower than the switch-over temperature (45°C in the present embodiment), and the concentration detected by the voltage sensor 168 is used if the temperature is not lower than the switch-over temperature, in order to perform the concentration control of aqueous methanol solution.

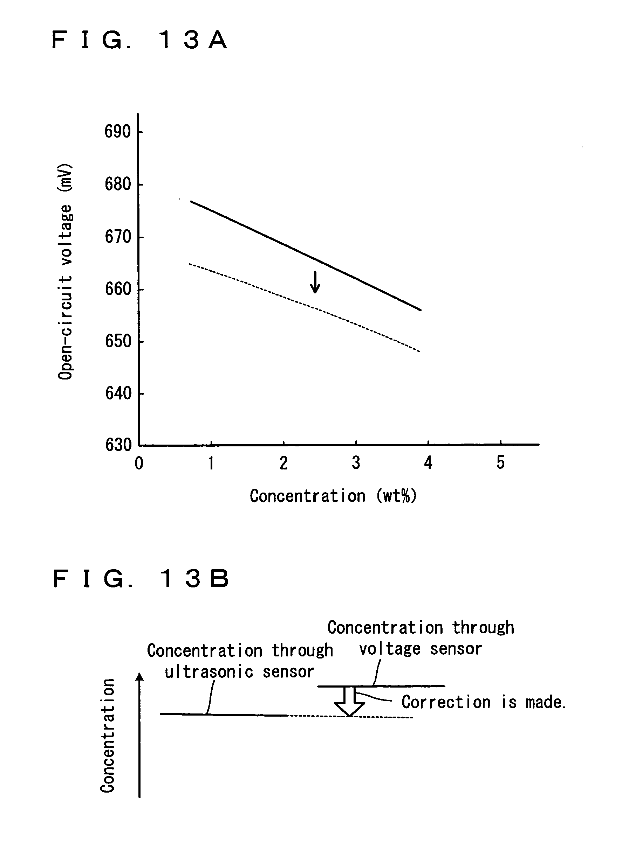

In addition, as shown in Fig. 13A, detection accuracy of the voltage sensor 168 deteriorates over time and as a result, detected open-circuit voltages which indicate the concentrations will tend to be lower as shown in a broken line. Under this circumstance, the concentration of aqueous methanol solution obtained by the CPU 172 based on the open-circuit voltage from the voltage sensor 168 is higher than the actual concentration, and it becomes impossible to control the concentration accurately. Therefore, when the difference between the concentration detected by the ultrasonic sensor 164 and the concentration detected by the voltage sensor 168 reaches or exceeds a predetermined value, it is determined that the detection accuracy of the voltage sensor 168 has deteriorated, and an update is made to the conversion information (the table data in the present embodiment) which is the information for converting open-circuit voltages (electrochemical information) detected by the voltage sensor 168 into concentrations. With this arrangement, concentrations obtained by the voltage sensor 168 are corrected as shown in Fig. 13B, and over-time deterioration of the detection accuracy of the voltage sensor 168 is eliminated.

As shown in Fig. 14A, the relationship between the concentration of aqueous methanol solution and the ultrasonic propagation speed is non-linear, with the curve's gradient, i.e. the difference in the ultrasonic propagation speed, becomes smaller as the concentration becomes higher. This means that concentration detection accuracy based on the ultrasonic propagation speed decreases as the concentration increases.

Therefore, the CPU 172 makes reference to table data, which is shown in Fig. 14B, stored in the memory 176 and relates concentrations detected through the ultrasonic sensor 164 to the corresponding switch-over temperatures, and sets (updates) the switch-over temperature in accordance with the concentration of aqueous methanol solution detected through the ultrasonic sensor 164.

Now, reference will be made to Fig. 15 and Fig. 16 to describe an operation which relates to the concentration detection of aqueous methanol solution and the updating of the conversion information in the fuel cell system 100. It should be noted here that the switch-over temperature is set within a range between the first threshold value and the second threshold value (including the two end values), with the initial setting being 45°C.

First, the temperature of aqueous methanol solution which is flowing in the ultrasonic sensor 164 is detected by the first temperature sensor 166 (Step S1). The CPU 172 checks if the temperature is not lower than the first threshold value (50°C in the present embodiment) (Step S3). If the temperature is lower than the first threshold value, the ultrasonic sensor 164 detects an ultrasonic propagation speed (physical information) (Step S5), and then the CPU 172 makes reference to conversion information stored in the memory 176, to obtain a concentration that corresponds to the propagation speed (Step S7). Next, the CPU 172 checks if the obtained concentration is valid (Step S9). If the obtained concentration is away from the previous detection data by a predetermined or greater amount, the obtained concentration data is judged as invalid and is deleted. The same judgment is also given if no data was obtained due to bubbles or impurities in the aqueous methanol solution in the ultrasonic sensor 164. Otherwise, the concentration obtained from the detection result of the ultrasonic sensor 164 is judged as valid, is taken as the concentration of the aqueous methanol solution, and is stored in the memory 176 (Step S11). Then, the CPU 172 makes reference to table data which represents the relationship in Fig. 14B, to set the switch-over temperature in accordance with the concentration of the aqueous methanol solution which was judged as valid (Step S13), and proceeds to Step S15. It should be noted here that the system determines that there is an error if a detected concentration exceeds 20 wt%. In this case, the switch-over temperature is set to 35°C, and the system stops the supply of methanol fuel from the fuel tank 128 to the aqueous solution tank 130 at least until the detected concentration comes down to or below 20 wt%.

If Step S9 results in NO or Step S3 results in YES, then the process goes directly to Step S15.

In Step S15, the second temperature sensor 170 detects a temperature of aqueous methanol solution near the voltage sensor 168. The CPU 172 checks if the temperature is not lower than the second threshold value (which is smaller than the first threshold value, and is 35°C in the present embodiment) (Step S17). If the temperature of the aqueous methanol solution is lower than the second threshold value, the process goes back to Step S1 whereas if the temperature of the aqueous methanol solution is not lower than the second threshold value, then the CPU 172 checks if a detection condition for the open-circuit voltage of the fuel cell 104 is satisfied (Step S19). The detection condition in this operation is that there is stable supply of air by the air pump 148. Whether the detection condition is satisfied or not can be judged from driving signal from the CPU 172 to the air pump 148. Such a detection condition is required because if the air supply is stopped or decreased, the amount of flow of air becomes unstable, and reliability of a detected open-circuit voltage decreases.

If Step S19 finds that the detection condition is satisfied, then the voltage sensor 168 detects an open-circuit voltage (electrochemical information) (Step S21). The CPU 172 makes reference to conversion information stored in the memory 176, obtains a concentration which corresponds to the open-circuit voltage, and stores it in the memory 176 (Step S23). Thereafter, the CPU 172 checks if the routine in Step S11 has been performed (Step S25). If it has, then the CPU 172 checks if the temperature of the aqueous methanol solution detected by the first temperature sensor 166 is not lower than the switch-over temperature (Step S27). If the temperature of the aqueous methanol solution is lower than the switch-over temperature, the concentration obtained through the ultrasonic sensor 164 is selected (Step S29) and the operation proceeds to Step S31. On the other hand, if the temperature of the aqueous methanol solution is not lower than the switch-over temperature, the concentration obtained through the voltage sensor 168 is selected (Step S33), and the operation proceeds to Step S31.

In Step S31, the CPU 172 checks if the difference between the concentration detected through the ultrasonic sensor 164 and the concentration detected through the voltage sensor 168 is not smaller than a predetermined value. If the concentration difference is not smaller than the predetermined value, the CPU 172 determines that the detection accuracy of the voltage sensor 168 has deteriorated, and updates the conversion information stored in the memory 176 for converting the electrochemical information into concentration so that the concentration difference obtained as above will be halved (reduced to 1/2) (Step S35), and then the process goes back to Step S1. Such a routine as the above is to keep the amount of correction made to the conversion information within a safe range since the output from the ultrasonic sensor 164 is not absolutely correct. By repeating the above process by following the steps shown in Fig. 15 and Fig. 16, conversion information is updated and becomes more accurate.

It should be noted here that the routine in Step S31 and Step S35, i.e. checking if the concentration difference is not smaller than a predetermined value and updating conversion information if the difference is not, is performed only when a concentration was detected through the ultrasonic sensor 164 and a concentration was detected through the voltage sensor 168. Therefore, in the present embodiment, Steps S31 and S35 are performed only when the temperature detected by the first temperature sensor 166 is lower than 50°C and the temperature detected by the second temperature sensor 170 is not lower than 35°C.

If Step S19 finds that the detection condition is not satisfied, the voltage sensor 168 does not detect the open-circuit voltage and the process goes back to Step S1. If the system finds that Step S11 was not performed (NO in Step S25), then the process goes back to Step S1. The process also goes back to Step 1 if Step S31 results in NO.

It should be noted here that the timing for performing the operation shown in Fig. 15 and Fig. 16 is preferably set in accordance with the duration of time for which power generation continues.

Note also, that in the present embodiment, the second temperature sensor 170 is provided near the anode intake I1 of the cell stack 102 which is a heat source; so the temperature detected by the first temperature sensor 166 is not higher than the temperature detected by the second temperature sensor 170.

Therefore, if the temperature of aqueous methanol solution detected by the first temperature sensor 166 is not lower than the first threshold value (50°C in the present embodiment), Step S17 in Fig. 15 always gives YES, so no concentration detection is made through the ultrasonic sensor 164, and only the voltage sensor 168 detects electrochemical information, and the CPU 172 selects a corresponding concentration based on the electrochemical information.

On the other hand, when the temperature of aqueous methanol solution detected by the second temperature sensor 170 is lower than the second threshold value (35°C in the present embodiment), Step S3 in Fig. 15 always gives NO, so no concentration detection is made through the voltage sensor 168, and only the ultrasonic sensor 164 detects physical information. Then the CPU 172 selects a corresponding concentration based on the physical information.

When the temperature of aqueous methanol solution detected by the second temperature sensor 170 is not smaller than the second threshold value and the temperature of aqueous methanol solution detected by the first temperature sensor 166 is lower than first threshold value, the ultrasonic sensor 164 detects physical information and the voltage sensor 168 detects electrochemical information. Then, if both of the concentration obtained through the ultrasonic sensor 164 and the concentration obtained through the voltage sensor 168 are valid and therefore stored in the memory 172, and if the temperature detected by the first temperature sensor 166 is lower than the switch-over temperature, the concentration obtained through the ultrasonic sensor 164 is selected by the CPU 172. On the other hand, if the temperature detected by the first temperature sensor 166 is not lower than the switch-over temperature, the concentration obtained through the voltage sensor 168 is selected by the CPU 172.

Then, the concentration of the aqueous methanol solution is controlled based on the selected concentration.

According to the motorbike 10 equipped with the fuel cell system 100 as described above, it is possible to select a concentration obtained through a concentration sensor which has higher detection accuracy based on the temperature of aqueous methanol solution, and it becomes possible to detect the concentration of aqueous methanol solution easily and accurately.

When the detected temperature of the aqueous methanol solution is within a range between the first threshold value and the second threshold value which is a range including a switch-over temperature, concentration detection is made through the ultrasonic sensor 164 while concentration detection is also made through the voltage sensor 168. With this arrangement, even if one of the concentration detections is unsuccessful, it is still possible to detect a concentration. Especially, at or near the switch-over temperature, concentration detection through the ultrasonic sensor 164 is sometimes unsuccessful due to e.g. bubbles attached to the ultrasonic sensor 164. The process described thus far is effective when, under such a situation as the above, priority should be given to the detection result from the ultrasonic sensor 164, and switch-over from the ultrasonic sensor 164 to the voltage sensor 168 should be made as late as possible.

It should be noted here that there may be an arrangement that the range between the first threshold value and the second threshold value is made wide so that concentration detection is made by using both the ultrasonic sensor 164 and the voltage sensor 168 at all practical presumed temperatures. Then, concentration detection is made by using both the ultrasonic sensor 164 and the voltage sensor 168 virtually at all times. With this arrangement, even if detection through one of the concentration sensors is unsuccessful, it is still possible to detect a concentration.

Further, by checking if the concentration obtained through the ultrasonic sensor 164 is valid or not, it becomes possible to obtain an accurate concentration.

Also, by selecting one of the concentration obtained through the ultrasonic sensor 164 and the concentration obtained through the voltage sensor 168 based on the detected temperature and the switch-over temperature, the concentration of aqueous methanol solution is obtained accurately.

Further, by updating the switch-over temperature based on the concentration of aqueous methanol solution, it becomes possible to detect the concentration more accurately.

Also, even when the temperature of aqueous methanol solution which flows through the fuel cell system 100 has reached a high temperature not lower than 50°C during operation of the fuel cell system 100, it is still possible to select the detection result through the voltage sensor 168, making it possible to obtain good detection accuracy under high temperature situations.

Further, by updating conversion information which is used for converting the output from the voltage sensor 168 to the concentration, as necessary based on the output from the ultrasonic sensor 164 which is stable over time, it becomes possible to eliminate detection accuracy deterioration of the voltage sensor 168.

It should be noted here that output change of the voltage sensor 168 caused by the detection accuracy deterioration of the voltage sensor 168 is believed to be gradual. For this reason, there may be an arrangement that updating of the conversion information for the voltage sensor 168 is not made if there is a sudden increase in the difference between the concentration detected through the ultrasonic sensor 164 and the concentration detected through the voltage sensor 168, because a sudden change is not likely to have been caused by the deterioration even if the difference is not smaller than the predetermined value. Such an arrangement will make sure that only those problems caused by the deterioration are avoided.

The present invention is suitable to a motorbike 10 in which the temperature of aqueous methanol solution changes over a wide range and service life of the system is generally long.

According to the above-described embodiment, an ultrasonic sensor 164 is used as a sensor which constitutes the first concentration detection means for physical detection of a concentration of aqueous methanol solution, and a voltage sensor 168 is used as a sensor which constitutes the second concentration detection means for electrochemical detection of a concentration of the aqueous methanol solution; however the present invention is not limited to these.

The sensor which constitutes the first concentration detection means may be provided by any sensor which can detect physical information based upon refraction index, dielectric constant, infrared ray absorbency index, viscosity, specific weight, solidification point, etc. Likewise, the sensor which constitutes the second concentration detection means may be provided by any sensor which can detect electrochemical information, such as a sensor disclosed in U.S. Patent No. 6,254,748.

Further, instead of detecting an open-circuit voltage of the fuel cell 104, an open-circuit voltage of the cell stack 102 may be detected by the voltage sensor 168 as electrochemical information.

Further, in the above-described embodiment, either one of the concentration obtained through the ultrasonic sensor 164 and the concentration obtained through the voltage sensor 168 is selected based on the detected temperature; however, the present invention is not limited to this. For example, either one of the physical information obtained by the ultrasonic sensor 164 and the electrochemical information obtained by the voltage sensor 168 may be selected based on the detected temperature, so that the concentration will be obtained on the basis of the selected information.

Also, according to the present embodiment, the temperature detection means which detects the temperature of aqueous methanol solution is provided by the first temperature sensor 166 and the second temperature sensor 170; however, the present invention is not limited to this. For example, only one of the first temperature sensor 166 and the second temperature sensor 170 may be used. In this case, the temperature detection in Step S1 and Step S15 shown in Fig. 15 is made only by the first temperature sensor 166 or only by the second temperature sensor 170.

Further, the temperature detection of aqueous methanol solution may not be made to the aqueous methanol solution itself; but the temperature of the cell stack 102 or the temperature of discharge gas from the cathode 104c may be detected alternatively.

The conversion information may be arithmetic expressions for converting a voltage as a piece of information into a concentration.

According to the above-described embodiment, the first threshold value and the second threshold value are set so as to define a range that includes the switch-over temperature. When the detection result of the temperature detection means is between the first threshold value and the second threshold value, each of the first concentration detection means and the second concentration detection means detect a concentration. However, the present invention is not limited to this. If the detection result is lower than the switch-over temperature, only the first concentration detection means may detect the concentration. On the other hand, if the detection result is not lower than the switch-over temperature, only the second concentration detection means may detect the concentration.

Further, the fuel cell system according to the present invention is suitable not only to motorbikes but also to any transport equipment such as automobiles and marine vessels.

Still further, the embodiment described above uses methanol as fuel and aqueous methanol solution as aqueous fuel solution; however the present invention is not limited by this. For example, the fuel may be provided by other alcoholic fuel such as ethanol, and the aqueous fuel solution may be provided by aqueous solution of the alcohol, such as ethanol aqueous solution.

The present invention being thus far described and illustrated in detail, it is obvious that these description and drawings only represent examples of the present invention, and should not be interpreted as limiting the invention. The spirit and scope of the present invention is only limited by words used in the accompanied claims.

## Claims

1. A fuel cell system comprising:
a fuel cell which generates electric energy by electrochemical reactions;
first concentration detection means which detects a concentration of aqueous fuel solution to be used for the generation of electric energy by the fuel cell, by using a physical characteristic of the aqueous fuel solution;
second concentration detection means which detects a concentration of the aqueous fuel solution by using an electrochemical characteristic of the aqueous fuel solution;
temperature detection means which detects a temperature of the aqueous fuel solution; and
selection means which selects one of the concentration obtained by the first concentration detection means and the concentration obtained by the second concentration detection means, based on the temperature detected by the temperature detection means.

2. The fuel cell system according to Claim 1, wherein the selection means causes each of the first concentration detection means and the second concentration detection means to detect a concentration of the aqueous fuel solution, and selects one of the concentrations, if a detection result of the temperature detection means is between a first threshold value and a second threshold value which is smaller than the first threshold value.

3. The fuel cell system according to Claim 2, further comprising determination means which checks if the concentration obtained by the first concentration detection means is valid or not.

4. The fuel cell system according to Claim 3, wherein the selection means selects one of the concentration obtained by the first concentration detection means and the concentration obtained by the second concentration detection means based on the temperature detected by the temperature detection means and a switch-over temperature which is smaller than the first threshold value and greater than the second threshold value if the determination means determines that the concentration obtained by the first concentration detection means is valid.

5. The fuel cell system according to Claim 4, further comprising setting means which sets the switch-over temperature based on the concentration obtained by the first concentration detection means.

6. The fuel cell system according to Claim 1, further comprising setting means which sets a switch-over temperature based on the concentration obtained by the first concentration detection means,
wherein the selection means selects one of the concentration obtained by the first concentration detection means and the concentration obtained by the second concentration detection means, based on the temperature detected by the temperature detection means and the switch-over temperature set by the setting means.

7. The fuel cell system according to Claim 1,
wherein the first concentration detection means includes an ultrasonic sensor for detecting the concentration of aqueous fuel solution based on an ultrasonic propagation speed in the aqueous fuel solution, the second concentration detection means including a voltage sensor for detecting the concentration of aqueous fuel solution based on an open-circuit voltage of the fuel cell.

8. The fuel cell system according to Claim 1, wherein the temperature of the aqueous fuel solution during operation reaches or exceeds 50°C.

9. A fuel cell system comprising:
a fuel cell which generates electric energy by electrochemical reactions;
first concentration detection means which detects a concentration of aqueous fuel solution to be used for the generation of electric energy by the fuel cell, by using a physical characteristic of the aqueous fuel solution;
storage means which stores conversion information for converting electrochemical information about the aqueous fuel solution into a concentration of the aqueous fuel solution;
second concentration detection means which detects electrochemical information of the aqueous fuel solution by using an electrochemical characteristic of the aqueous fuel solution, makes reference to the conversion information and converts the electrochemical information into the concentration of the aqueous fuel solution; and
update means which updates the conversion information in accordance with the concentration obtained by the first concentration detection means and the concentration obtained by the second concentration detection means.

10. A motorbike comprising the fuel cell system according to one of Claims 1 through 9.

11. Transport equipment comprising the fuel cell system according to one of Claims 1 through 9.
